# FASCICULE DE BREVET EUROPEEN

(11) **EP 0 468 855 B1**
(45) Date de publication et mention de la délivrance du brevet: **01.06.1994**
(21) Numéro de dépôt: 91401987.2
(22) Date de dépôt: 16.07.1991
(51) Int. Cl.: B30B 15/02, B21D 37/14, B23Q 3/155

(54) **Agencement pour le changement rapide d'un outil de presse**
Werkzeugschnellwechselanordnung für eine Presse
Arrangement for quick tool-change in a press

(30) Priorité: 25.07.1990 FR 9009512
(43) Date de publication de la demande: 29.01.1992
(73) Titulaire: AUTOMOBILES PEUGEOT, 75116 Paris (FR); AUTOMOBILES CITROEN, 92200 Neuilly-sur-Seine (FR)
(72) Inventeur: Ropp, Jean-Paul, F-68990 Heimsbrunn (FR)
(74) Mandataire: Obolensky, Michel

(56) Documents cités:
- DE-A- 3 433 566
- FR-A- 2 536 008
- FR-A- 2 546 087
- US-A- 3 986 448
- US-A- 4 597 709
- PATENT ABSTRACTS OF JAPAN vol. 7, no. 141 (M-223)(1286) 21 Juin 1983 & JP-A-58 53 334 (KOBAYASHI ) 29 Mars 1983
- PATENT ABSTRACTS OF JAPAN vol. 9, no. 155 (M-392)(1878) 29 Juin 1985 & JP-A-60 30 534 (HINO ) 16 Février 1985

## Description

La présente invention concerne un agencement pour le changement rapide d'un outil de presse.

L'invention trouve par exemple à s'appliquer à une presse à mouvement alternatif dont on veut changer rapidement le porte-outil inférieur qui équipe la table de la presse.

Des industries utilisant ce type de presse, par exemple d'estampage de pièces forgées ou de découpe et d'emboutissage, telles que par exemple l'industrie automobile, sont confrontées à différents problèmes de rentabilité et d'agumentation de leurs performances. Les recherches d'amélioration des conditions de la production en grande série visent notamment à réduire les stocks de pièces fabriquées ainsi que le parc de machines utilisées ce qui nécessite d'augmenter le nombre des changements de fabrication réalisés sur une même presse.

Pour que ces nombreux changements ne nuisent pas à la productivité des installations et donc que leurs taux d'utilisation soient maintenus ou augementés, il est souhaitable de réduire au minimum les temps morts provoqués dans la production par les changements d'outillage sur les presses qui sont particulièrement longs du fait des opérations de démontage et de remontage avec serrage manuel des outils sur les presses.

FR-A-2.536.008 décrit un dispositif de transport d'un moule d'une presse à injection à une table de transfert au moyen d'une chaîne déplacée par une barre d'accouplement montée sur le moule parallèlement au sens de transport du moule.

DE-A-3.433.566 décrit une presse munie de moyens de changement automatique d'outil, comportant des moyens de translation de l'outil entre une position de mise en place de l'outil sur la presse et une position d'évacuation de l'outil. La table de presse comporte des rainures, parallèles aux déplacements des moyens de translation, dans lesquelles se déplacent des coulisseaux munis de tenons d'entraînement de l'outil. Les coulisseaux sont rétractés dans la presse entre la dépose de l'outil à changer et la prise du nouvel outil.

Les moyens de changement d'outil décrits dans ces documents sont complexes ce qui augmente d'autant le temps de changement d'outil.

L'invention a pour but de proposer un agencement pour le changement d'un outil plus simple que dans l'état de la technique, permettant ainsi d'obtenir un gain de temps pendant le changement d'outil.

A cet effet, l'invention a pour objet un agencement pour le changement rapide d'un outil de presse dont une face inférieure est en appui sur la face supérieure de la table de la presse, du type dans lequel la presse comporte un chariot mobile en translation entre une position de mise en place de l'outil, sur la presse et une position d'évacuation de l'outil, et qui comporte une table mobile de changement d'outil qui peut se déplacer par rapport à la presse selon une direction perpendiculaire à celle du chariot mobile entre une première position d'évacuation de l'outil de la presse et une seconde position de mise en place d'un nouvel outil sur la presse, le plateau de la table mobile comportant au moins deux postes agencés successivement selon la direction de déplacement de la table mobile, un premier poste de stockage de l'outil évacué et un second poste de stockage du nouvel outil à mettre en place, caractérisé en ce qu'un doigt d'entraînement du chariot fait saillie hors de la face supérieure de la table de la presse et est reçu dans une rainure débouchante formée dans la face inférieure de l'outil et qui s'étend selon une direction perpendiculaire à la direction de déplacement du chariot et la face supérieure du plateau est agencée sen-siblement à la même altitude que la face supérieure de la table de la presse et comporte des moyens de positionnement des outils de manière que les rainures des outils stockés simultanément sur le plateau soient alignées.

Selon d'autres caractéristiques de l'invention :
- l'agencement comporte des moyens de roulement comportant des galets agencés à la face inférieure de l'outil prévus pour coopérer avec des pistes de roulement correspondantes de la face supérieure de la table de la presse et des rouleaux agencés à la face supérieure du plateau de la table mobile prévus pour coopérer avec la face inférieure de l'outil pour en faciliter le déplacement ;
- lesdits moyens de positionnement comportent des moyens de butée fixes qui font saillie hors de la face supérieure du plateau de la table mobile et qui coopèrent avec un bord latéral d'un outil et des moyens de butée escamotables agencés sur la table mobile à l'opposé des moyens de butée fixes et qui coopèrent avec un bord latéral opposé de l'outil lorsque ce dernier est stocké sur la table mobile ;
- le chariot mobile est commandé par un dispositif du type vis-écrou qui est agencé dans une rainure formée dans la face supérieure de la table de la presse ;
- l'agencement comporte des moyens de commande automatisés des déplacements du chariot et de la table mobile ;
- l'outil comporte une fausse table sur laquelle il est bridé et dont la face inférieure constitue ladite face inférieure de l'outil qui prend appui sur la face supérieure de la table de la presse.

D'autres caractéristiques et avantages de l'invention apparaîtront à la lecture de la description détaillée qui va suivre pour la compréhension de laquelle on se reportera aux dessins annexés dans lesquels :
- La figure 1 est une vue de dessus simplifiée d'un agencement selon l'invention ;
- la figure 2 est une vue en section partielle selon la ligne 2-2 de la figure 1 ; et
- la figure 3 est une vue en section partielle selon la ligne 3-3 de la figure 2.

On a représenté sur les figures une table 10 d'une presse 12 dont la face supérieure horizontale 14 reçoit un outil 16A.

Dans le mode de réalisation représenté aux figures, l'outil 16A comporte une fausse table 18A dont la face inférieure 20A est maintenue en appui plan contre la face supérieure 14 de la table de presse 10.

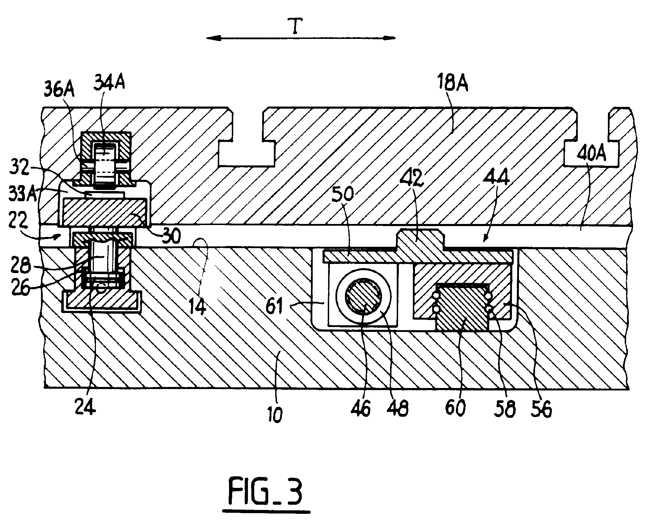

Lorsqu'il est en place dans sa position de travail sur la table de presse 10, l'outil 16A est bridé sur la table 10 par l'intermédiaire d'une pluralité de dispositifs de bridage du type du dispositif 22 illustré à la figure 3.

Chaque dispositif de bridage est constitué par un vérin hydraulique à double effet comportant un piston de commande 24 reçu dans une chambre de commande 26 et dont la tige 28 comporte des règles de serrage 30 qui sont reçues dans des rainures correspondantes 33A de la fausse table 18A de manière à pouvoir la maintenir en position serrée sur la table 10 comme cela est illustré à la figure 3.

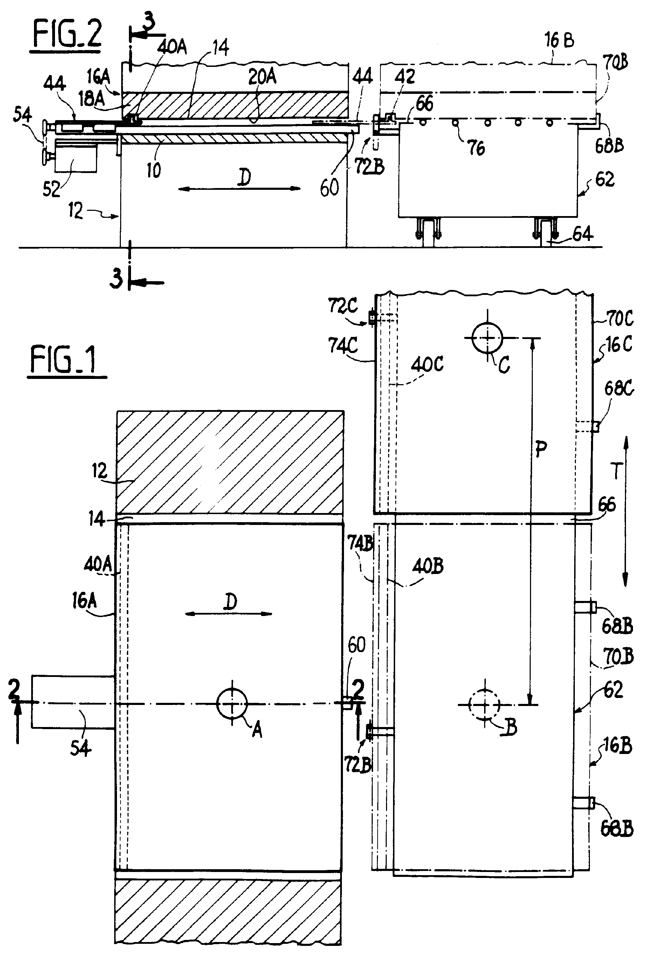

La face supérieure libre 32 des règles 30 est susceptible de coopérer, lorsque les tiges de vérin 28 sont dans la position sortie (non représentée), avec des galets 34A montés libres en rotation autour de leurs axes 36A dans la fausse table 18A et permettre un déplacement de l'outil 16A selon la direction D indiquée aux figures 1 et 2.

Conformément à l'invention, la face inférieure 20A de l'outil 16A comporte une rainure débouchante 40A qui s'étend selon une direction perpendiculaire à celle des rainures 33A.

La rainure 40A reçoit un doigt d'entraînement 42 d'un chariot mobile 44 de déplacement de l'outil.

Le chariot 44 est commandé par un dispositif du type vis-écrou 46, 48 dont l'écrou 48 est fixé à la face inférieure de la plaque 50 constituant le châssis du chariot 44 et dont la vis 46 est entraînée en rotation par un moteur 52 qui lui transmet son mouvement par une chaîne 54.

Les déplacements alternatifs du chariot mobile 44 par rapport à la table de presse 10 sont guidés par des patins en U 56 qui coulissent par l'intermédiaire de billes 58 sur un rail 60 aménagé dans le fond d'une rainure 61 formée dans la face supérieure 14 de la table 10.

Le chariot 44 est conçu de manière que le doigt d'entraînement 42 fasse saillie au-delà de la face supérieure 14 de la table de presse 10 pour être reçu dans la rainure 40A de la fausse table 18A de l'outil 16A, que la fausse table soit en position haute ou en position basse.

Le chariot 44 est susceptible de se déplacer entre une position A rétractée représentée en traits pleins à la figure 2 dans laquelle l'outil 16A est en position de travail sur la table 10 et une position sortie, dite position B d'évacuation de l'outil, représentée en traits mixtes à la figure 2.

L'agencement pour le changement rapide d'outil comprend également une table mobile 62 qui est susceptible de se déplacer en translation par rapport à la presse 12 selon une direction T perpendiculaire à la direction D de déplacement du chariot 44.

La table mobile 62 comporte par exemple des roues 64 et peut être motorisée de manière à commander ces déplacements selon la direction T.

La table mobile 62 comporte au moins deux postes de stockage d'outils agencés successivement selon la direction T.

Un premier poste donc le centre est désigné par la référence B est prévu pour recevoir l'outil lorsque l'on désire procéder à son changement.

Le second poste C permet le stockage d'un nouvel outil 16C qui est prévu pour remplacer l'outil 16A de la presse.

Les déplacements de l'outil 16A vers la position B sont assurés au moyen du chariot motorisé 44 et la face supérieure 66 de la table mobile 62 est agencée sensiblement à la même altitude que la face supérieure 14 de la table 10.

On a représenté en traits mixtes à la figure 1, la silhouette d'un outil 16B dans la position de stockage qu'il occupe au poste B d'évacuation d'outil après qu'il ait été évacué de sa position de travail A sur la table de presse 10.

Les postes B et C de la table mobile 62 comportent des moyens de butée latérale fixes 68B et 68C qui sont prévus pour coopérer respectivement avec un bord latéral 70B, 70C de l'outil 16B, 16C ainsi que des moyens de butée escamotables pivotants 72B, 72C qui sont prévus pour coopérer respectivement avec un bord latéral opposé 74B, 74C de l'outil 16B, 16C.

Lorsqu'ils sont dans leur position haute, ou relevée, telle que représentée aux figures 1 et 2, les moyens de butée escamotables 72B et 72C ont pour but de permettre un positionnement précis des outils 16B et 16C sur la face supérieure 66 du plateau de la table mobile 62 de manière à ce que les rainures d'entraînement 40B et 40C des deux outils soient alignées l'une par rapport à l'autre comme cela est représenté à la figure 1.

La face supérieure 66 du plateau de la table mobile 62 peut être équipée de rouleaux 76 tels que ceux illustrés schématiquement à la partie droite de la figure 2 de manière à faciliter les déplacements des outils sur cette face.

Un changement rapide d'outils grâce à l'agencement selon l'invention s'effectue de la manière suivante.

En partant de la position de travail A, l'opérateur commence par provoquer le débridage de la fausse table 18A à l'aide des dispositifs 22.

Cette opération a pour but de provoquer un léger soulèvement de la fausse table 18A et la mise en contact des galets 34A avec les pistes 32.

Le doigt d'entraînement 42 s'étend verticalement depuis la face supérieure 14 sur une hauteur suffisante pour demeurer en permanence engagé dans la rainure 40A.

La table mobile 62 est amenée devant la presse 12 dans la configuration et dans la position illustrée à la figure 1, c'est-à-dire dans la position dans laquelle un poste de réception d'outil évacué B est en regard de l'outil 16A qui équipe la presse.

L'opérateur commande ensuite l'évacuation de l'outil 16A grâce au chariot 44 qui provoque le déplacement de l'outil 16A selon la direction B vers la droite en considérant la figure 1 jusqu'à ce que son bord latéral 70B vienne en appui contre les moyens de butée fixes 68B de la table mobile 62.

Le doigt d'entraînement 42 du chariot 44 demeure engagé dans la rainure 40B de l'outil 16B qui est désormais dans sa position évacuée B sur la table mobile 62.

L'opérateur verrouille l'outil 16B en position sur la table mobile 62 grâce aux moyens de butée escamotables 72B de manière que sa rainure 40B soit parfaitement alignée avec la rainure 40C du nouvel outil 16C que l'on veut mettre en place sur la presse 10 en lieu et place de l'outil 16A.

L'opérateur provoque ensuite le déplacement de la table mobile T d'un pas P correspondant à la distance séparant les centres B et C des deux outils 16B et 16C qui sont stockés consécutivement sur la face supérieure 66 de la table mobile 62.

Au cours de ce déplacement, le doigt d'entraînement 42 coulisse à l'intérieur de la rainure 40B puis pénètre automatiquement dans la rainure 40C.

A l'issue du déplacement de la table 62 selon la direction T, vers le bas en considérant la figure 1, l'outil 16C se trouve en regard de la table 10 de la presse 12.

L'opérateur n'a plus ensuite qu'à provoquer la commande du chariot mobile de déplacement d'outil 44 selon la direction D, vers la gauche en considérant la figure 1, pour amener l'outil 16C en position de travail A sur la table 10.

Il ne reste plus ensuite à l'opérateur qu'à procéder au bridage de la table porte-outils du nouvel outil 16C en position de travail A.

L'ensemble des opérations qui viennent d'être décrites peuvent bien entendu être automatisées à l'aide d'un dispositif de commande non représenté.

L'automatisation des opérations peut être complète et inclure notamment la commande des moyens de butée escamotables pivotants dont la rotation peut être effectuée à l'aide d'un vérin pneumatique non représenté.

Grâce à l'agencement selon l'invention, on notera que le démontage et le montage du nouvel outil sur sa fausse table peut être effectué en temps masqué directement sur la table mobile 62 pendant le fonctionnement de la presse.

L'invention n'est pas limitée à un outil de presse comportant une fausse table, la rainure 40 pouvant être formée directement dans la face inférieure d'un outil de conception plus simple.

## Revendications

1. Agencement pour le changement rapide d'un outil de presse (12) dont une face inférieure est en appui sur la face supérieure (14) de la table (10) de la presse (12), du type dans lequel la presse comporte un chariot (44) mobile en translation entre une position de mise en place de l'outil, sur la presse et une position d'évacuation de l'outil, et qui comporte une table mobile (62) de changement d'outil qui peut se déplacer par rapport à la presse (12) selon une direction (T) perpendiculaire à celle (D) du chariot mobile (44) entre une première position d'évacuation de l'outil de la presse et une seconde position de mise en place d'un nouvel outil sur la presse, le plateau (66) de la table mobile comportant au moins deux postes (B, C) agencés successivement selon la direction de déplacement (T) de la table mobile, un premier poste de stockage de l'outil évacué (16B) et un second poste de stockage du nouvel outil (16C) à mettre en place, caractérisé en ce qu'un doigt d'entraînement (42) du chariot fait saillie hors de la face supérieure (14) de la table de la presse et est reçu dans une rainure débouchante (40A) formée dans la face inférieure (20A) de l'outil (16A) et qui s'étend selon une direction (T) perpendiculaire à la direction (D) de déplacement du chariot et en ce que la face supérieure (66) du plateau est agencée sensiblement à la même altitude que la face supérieure (14) de la table de la presse et comporte des moyens de positionnement des outils de manière que les rainures (40B, 40C) des outils stockés simultanément sur le plateau soient alignées.

2. Agencement selon la revendication 2, caractérisé en ce qu'il comporte des moyens de roulement comportant des galets (34A) agencés à la face inférieure de l'outil (16A) prévus pour coopérer avec des pistes de roulement correspondantes (32) de la face supérieure de la table (10) de la presse (12) et des rouleaux (76) agencés à la face supérieure (66) du plateau de la table mobile prévus pour coopérer avec la face inférieure de l'outil pour en faciliter le déplacement.

3. Agencement selon l'une quelconque des revendications précédentes, caractérisé en ce que lesdits moyens de positionnement comportent des moyens de butée fixes (68B, 68C) qui font saillie hors de la face supérieure du plateau de la table mobile et qui coopèrent avec un bord latéral (70B, 70C) d'un outil (16B, 16C) et des moyens de butée escamotables (72B, 72C) agencés sur la table mobile (62) à l'opposé des moyens de butée fixes et qui coopèrent avec un bord latéral opposé (74B, 74C) de l'outil (16B, 16C) lorsque ce dernier est stocké sur la table mobile (62).

4. Agencement selon l'une quelconque des revendications précédentes, caractérisé en ce que le chariot mobile (44) est commandé par un dispositif du type vis-écrou (46, 48) qui est agencé dans une rainure (61) formée dans la face supérieure (14) de la table (10) de la presse (12).

5. Agencement selon l'une quelconque des revendications précédentes, caractérisé en ce qu'il comporte des moyens de commande automatisés des déplacements du chariot et de la table mobile.

6. Agencement selon l'une quelconque des revendications précédentes, caractérisé en ce que l'outil comporte une fausse table (18A) sur laquelle il est bridé et dont la face inférieure constitue ladite face inférieure de l'outil (20A) qui prend appui sur la face supérieure (14) de la table de la presse.

## Patentansprüche

1. schnellwechselanordnung eines Werkzeugs einer Presse (12), deren Unterseite auf der Oberseite (14) des Tisches (10) der Presse (12) aufliegt, und zwar für einen Typ von Presse mit einem mobilen Wagen (44) in Translation zwischen einer Position des Einsetzens des Werkzeugs auf der Presse und einer Position des Auswerfens des Werkzeugs, und die über einen mobilen Tisch (62) zum Werkzeugwechsel verfügt, der in Bezug auf die Presse (12) in senkrechter Richtung (T) zur Richtung (D) des mobilen Wagens (44) bewegt werden kann zwischen einer ersten Position des Auswerfens des Werkzeugs aus der Presse und einer zweiten Position des Einsetzens eines neuen Werkzeugs auf der Presse, wobei die Platte (66) des mobilen Tisches mindestens zwei hintereinander in Bewegungsrichtung (T) des mobilen Tisches angeordnete Stationen umfaßt, eine erste Station zur Lagerung des ausgeworfenen Werkzeugs (16B) und eine zweite Station zur Lagerung des neu einzusetzenden Werkzeugs (16C),
**dadurch gekennzeichnet,** daß ein Mitnehmerfinger (42) des Wagens aus der Oberseite (14) des Pressetisches vorspringt und von einer einmündenden Nut (40A) in der Unterseite (20A) des Werkzeugs (16A) aufgenommen wird, die sich in senkrechter Richtung (T) zur Bewegungsrichtung (D) des Wagens erstreckt, und **dadurch**, daß die Oberseite (66) der Platte in gleicher Höhe angeordnet ist wie die Oberseite (14) des Pressetisches und eine Vorrichtung zur Positionierung der Werkzeuge umfaßt, in der Weise, daß die Nuten (40B, 40C) der gleichzeitig auf der Platte gelagerten Werkzeuge in einer Linie ausgerichtet sind.

2. Anordnung gemäß Anspruch 2,
**dadurch gekennzeichnet,** daß sie eine Rollvorrichtung mit auf der Unterseite des Werkzeugs angeordneten Rollen (34A) umfaßt, die zum Zusammenwirken mit den entsprechenden Rollbahnen(32) der Oberseite des Tisches (10) der Presse (12) vorgesehen sind, sowie an der Oberseite (66) der Platte des mobilen Tisches angeordnete Rollen (76) zum Zusammenwirken mit der Unterseite zur Erleichterung seiner Bewegung.

3. Anordnung gemäß einem beliebigen der vorstehenden Ansprüche,
**dadurch gekennzeichnet,** daß die besagte Positionierungsvorrichtung feste Anschlagvorrichtungen (68B, 68C) umfaßt, die aus der Oberseite der Platte des mobilen Tisches vorspringen und mit einem seitlichen Rand (70B, 70C) eines Werkzeugs (16B, 16C) zusammenwirken, sowie einziehbare Anschlagvorrichtungen (72B, 72C), die auf dem mobilen Tisch (62) entgegengesetzt zu den festen Anschlagvorrichtungen angeordnet sind und die mit einem entgegengesetzten seitlichen Rand (74B, 74C) des Werkzeugs (16B, 16C) zusammenwirken, wenn dieses auf dem mobilen Tisch (62) gelagert ist.

4. Anordnung gemäß einem beliebigen der vorstehenden Ansprüche,
**dadurch gekennzeichnet,** daß der mobile Wagen (44) von einer Vorrichtung vom Typ Schraube-Mutter (44, 48) gesteuert wird, die in einer in die Oberseite (14) des Tisches (10) der Presse (12) eingelassenen Nut (61) angeordnet ist.

5. Anordnung gemäß einem beliebigen der vorstehenden Ansprüche,
**dadurch gekennzeichnet,** daß sie eine Vorrichtung zur automatischen Steuerung der Bewegungen des Wagens und des mobilen Tisches umfaßt.

6. Anordnung gemäß einem beliebigen der vorstehenden Ansprüche,
**dadurch gekennzechnet,** daß das Werkzeug über eine Zwischenplatte (18A) verfügt, auf der es angeflanscht ist und deren Unterseite die erwähnte Unterseite des Werkzeugs (20A) bildet, die auf der Oberseite (14) des Pressetisches aufliegt.

## Claims

1. An arrangement for rapidly changing a press tool (12) an underside of which bears on the upper surface (14) of the table (10) of the press (12), of the type in which the press comprises a carriage (44) adapted for translatory movement between a tool positioning place on the press and a tool removal position and which comprises a movable tool-changing table (62) adapted for displacement in respect of the press (12) in a direction (T) at right-angles to that (D) of the carriage (44) adapted for movement between a first position for removing the tool from the press and a second position in which a fresh tool is placed on the press, the top (66) of the movable table comprising at least two stations (B, C) arranged one after the other in the direction of displacement (T) of the movable table, a first position for storing the removed tool (16B) and a second station for storing the fresh tool (16C) which is to be placed in position, characterised in that a carriage driving member (42) projects beyond the upper face (14) of the press table and is received in an open groove (40A) formed in the underside (20A) of the tool (16A) and which extends in a direction (T) at right-angles to the direction (D) of displacement of the carriage and in that the upper surface (66) of the top is arranged at substantially the same height as the upper surface (14) of the press table and comprises tool positioning means so that the grooves (40B, 40C) of the tools stored at one and the same time on the top of the table are aligned.

2. An arrangement according to Claim 2, characterised in that it comprises rolling means comprising rollers (34A) disposed on the underside of the tool (16A) and provided in order to cooperate with corresponding rolling tracks (32) on the upper surface of the table (10) of the press (12) and rollers (76) arranged on the upper surface (66) of the movable table top and provided to cooperate with the underside of the tool in order to facilitate the displacement thereof.

3. An arrangement according to any one of the preceding Claims, characterised in that the said positioning means comprise fixed abutment means (68B, 68C) which project beyond the upper surface of the top of the movable table and which cooperate with a lateral edge (70B, 70C) of a tool (16B, 16C) and retractable abutment means (72B, 72C) arranged on the movable table (62) opposite fixed abutment means and which cooperate with an opposite lateral edge (74B, 74C) of the tool (16B, 16C) when this latter is stored on the movable table (62).

4. An arrangement according to any one of the preceding Claims, characterised in that the movable carriage (44) is operated by a device (46, 48) of the screw-and-nut type which is disposed in a groove (61) formed in the upper surface (14) of the table (10) of the press (12).

5. An arrangement according to any one of the preceding Claims, characterised in that it comprises automated means of controlling the movements of the carriage and of the movable table.

6. An arrangement according to any one of the preceding Claims, characterised in that the tool comprises a false table (18A) on which it is flanged and the underside of which constitutes the said underside of the tool (20A) which bears on the upper surface (14) of the press table.
